# EUROPEAN PATENT SPECIFICATION

(11) **EP 3 049 647 B1**
(45) Date of publication and mention of the grant of the patent: **02.08.2017**
(21) Application number: 14771855.5
(22) Date of filing: 19.09.2014
(51) Int. Cl.: F01N 3/20, F01P 7/04

(54) **ENGINE EXHAUST GAS PURIFIER**
ABGASNACHBEHANDLUNGSSYSTEM
SYSTÈME DE TRAITEMENT DES GAZ D'ÉCHAPPEMENT

(30) Priority: 25.09.2013 JP 2013198220
(43) Date of publication of application: 03.08.2016
(73) Proprietor: Caterpillar SARL, 1208 Geneva (CH)
(72) Inventor: SHUTO, Tomoaki, Setagaya-ku Tokyo 158-8530 (JP); HARA, Keigo, Setagaya-ku Tokyo 158-8530 (JP); SHIRAI, Shigeki, Setagaya-ku Tokyo 158-8530 (JP)
(74) Representative: BRP Renaud & Partner mbB Rechtsanwälte Patentanwälte Steuerberater
(86) International application number: PCT/EP2014/069958
(87) International publication number: WO 2015/044038

(56) References cited:
- EP-A1- 2 053 211
- EP-A1- 2 175 112
- WO-A1-2012/101041
- DE-C1- 19 856 366
- GB-A- 2 419 690

## Description

### TECHNICAL FIELD

The present invention relates to overheat prevention for a urea water injector which supplies urea water serving as a reduction agent and which is provided in a exhaust gas purifier that reduces and removes NOx (nitrogen oxide) in engine exhaust gas using a urea SCR catalyst.

### BACKGROUND ART

A typical example of an exhaust gas purifier that reduces and removes NOx in engine exhaust gas uses a urea SCR catalyst (see, for example, Patent Literature 1).

This apparatus has a urea SCR catalyst installed in an exhaust gas pipe and a urea water injector provided upstream of the catalyst to inject and supply urea water. The apparatus reduces and removes NOx by allowing ammonia originating from urea water as a result of hydrolysis reaction based on exhaust gas heat to react with the NOx in the exhaust gas on the urea SCR catalyst so that the ammonia is decomposed into harmless N2 (nitrogen) and H2O (water).

[Patent Literature 1] Japanese Patent Application Laid-open No. 2000-303826 [Patent Literature 2] International Patent Application Laid-Open No. WO 2012/101041 A1 [Patent Literature 3] European Patent Application Laid-Open No. EP 2053211 A1

In the engine exhaust gas purifier using the urea SCR catalyst and the urea water injector, an NOx removal rate may be reduced by sulfur poisoning in which sulfur components in fuel attach to the urea SCR catalyst. Thus, a poisoning recovery mode is implemented in which the SCR catalyst is periodically increased in temperature to recover from sulfur poisoning.

In the poisoning recovery mode, engine exhaust gas temperature is controlled such that the temperature of the SCR catalyst is increased. Thus, the urea water injector, installed near the SCR catalyst, is exposed to high heat. Furthermore, at this time, the injection of the urea water is stopped and the operation of cooling means for the urea water injector is disrupted. As a result, the urea injector may be overheated during severe heat or an engine high load, resulting in reduced reliability of the exhaust gas purifier or a failure in the exhaust gas purifier.

With the foregoing in view, it is a technical object of the present invention to provide an engine exhaust gas purifier including a urea SCR catalyst and a urea water injector to prevent the urea water injector from being overheated as a result of stoppage of injection of urea water when the urea SCR catalyst becomes hot in the poisoning recovery mode for the urea SCR catalyst. In WO 2012/101041 A1 an exhaust gas aftertreatment device comprising a selective catalytical reduction (SCR) catalyst with an upstream urea injector is shown. The exhaust gas aftertreatement device is equipped with a fan that permitts ambient air to be activley delivered to the injector for cooling (see patent literature 2).

In EP 2053211 A1 an exhaust gas aftertreatment method comprising a sulfur poisoning recovery mode for an SCR catalyst using periodic stops of aqueous urea solution injection and exhaust gas temperature increase (see patent literature 3).

### DISCLOSURE OF THE INVENTION

To accomplish the object, an engine exhaust gas purifier according to the present invention includes a urea SCR catalyst installed in an exhaust gas pipe from an engine to reduce and remove NOx, a urea water injector that supplies urea water serving as a reduction agent to an upstream side of the catalyst, and a controller, wherein the urea water injector is installed on a downstream side of air blow from a variable speed cooling fan, the rotation speed of which is increased or reduced in accordance with an increase or a decrease in a temperature of a component of the engine to be cooled; the controller implements a poisoning recovery mode in which supply of urea water is periodically stopped for a predetermined time and exhaust gas temperature is controlled to increase a temperature of a catalyst, the poisoning recovery mode being intended to recover the urea SCR catalyst from sulfur poisoning, and during the poisoning recovery mode, the controller changes the rotation speed of the variable speed cooling fan to a higher speed to increase an amount of blown air to reduce an atmospheric temperature of the urea water injector, thus preventing the injector from being overheated.

Preferably, the controller has a "normal map" for a poisoning recovery mode non-implementation state and a "high-speed map" for a poisoning recovery mode implementation state in both of which a relation between the temperature of the component to be cooled and the fan rotation speed is continuously specified, and switches the "normal map" to the "high-speed map" in the poisoning recovery mode.

In the engine exhaust gas purifier configured according to the present invention, the urea water injector that supplies urea water to the urea SCR catalyst is installed on the downstream side of the air blow from the variable speed cooling fan in the engine. In the poisoning recovery mode, the rotation speed of the variable speed cooling fan is changed to the higher speed to increase the amount of cooling air blown. This reduces the atmospheric temperature of the urea water injector to prevent the injector from being overheated.

### BRIEF DESCRIPTION OF THE DRAWINGS

FIG. 1 is a diagram illustrating a configuration of an engine exhaust gas purifier configured according to the present invention.
FIG. 2 is a map showing a relation between a rotation speed of a variable speed cooling fan and a temperature of an engine component.

### BEST MODE FOR CARRYING OUT THE INVENTION

An engine exhaust gas purifier configured according to the present invention will be described below in further detail with reference to the attached drawings showing a preferred embodiment.

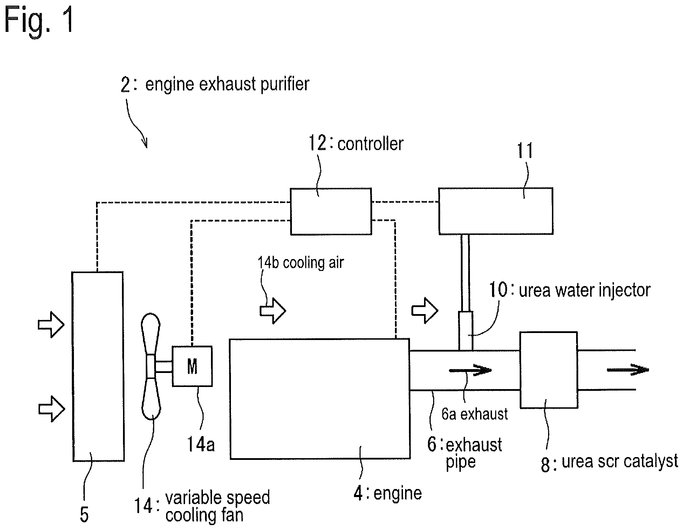

The preferred embodiment will be described with reference to FIG. 1. An engine exhaust gas purifier 2 includes a urea SCR catalyst 8 installed in an exhaust gas pipe 6 from an engine 4 to reduce and remove NOx, a urea water injector 10 that supplies urea water serving as a reduction agent to an upstream side of the catalyst 8, and a controller 12. The urea water injector 10 is installed on a downstream side of air blow from a variable speed cooling fan 14 with its rotation speed increased or reduced in accordance with an increase or a decrease in the temperature of a component 5 of the engine 4 to be cooled.

The controller 12 implements a poisoning recovery mode for recovering the urea SCR catalyst 8 from sulfur poisoning, and in the poisoning recovery mode, changes the rotation speed of the variable speed cooling fan 14 set in accordance with an increase or a decrease in the temperature of the component 5, to a higher speed to increase the amount of cooling air blown to reduce the atmospheric temperature of the urea water injector 10, as described below in detail.

According to the present invention, the urea SCR catalyst 8, the urea water injector 10, the variable speed cooling fan 14, and the poisoning recovery mode itself may be based on well-known techniques. Thus, these components will be described below in brief and their detailed descriptions are omitted.

The urea SCR catalyst 8 is a urea selective reduction catalyst, for example, a zeolite catalyst. Urea water is used as a reduction agent. Ammonia originating from hydrolysis reaction utilizing exhaust gas heat reacts with NOx in exhaust gas on the reduction catalyst to decompose NOx into harmless N2 (nitrogen) and H2O (water).

The urea water injector 10 injects and feeds urea water in a urea water tank 11 into the exhaust gas pipe 6 based on an instruction from the controller 12.

The variable speed cooling fan 14 is provided for the engine 4 to introduce outside air into the component 5 to be cooled, for example, a radiator for cooling water, a cooler for hydraulic oil, an after cooler for engine air intake, or the like to generate and allow cooling air to flow. The variable speed cooling fan 14 includes drive means 14a such as a hydraulic motor or an electric motor which can controllably change the rotation speed.

The rotation speed of the variable speed cooling fan 14 is set with respect to the temperature of each of the components to be cooled. The controller 12 performs control such that the fan rotates at one of the rotation speeds that needs to be the highest.

The poisoning recovery mode is a control mode in which the temperature of the urea SCR catalyst 8 poisoned with sulfur by sulfur components in fuel attaching to the urea SCR catalyst 8 is periodically increased and thus the urea SCR catalyst 8 is recovered from sulfur poisoning. In the poisoning recovery mode, while the engine is in normal operation, the catalyst 8 is forcibly recovered by using appropriate means to periodically (for example, every several hundred hours) control the exhaust gas temperature to increase the temperature of the catalyst for a predetermined time (for example, several hours) and stopping the supply of urea water.

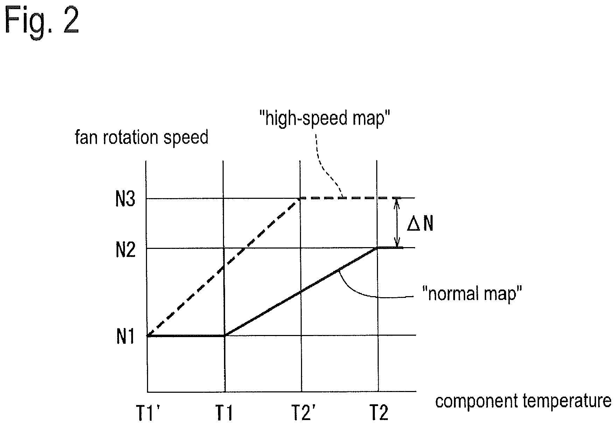

With reference to FIG. 1 and FIG. 2, the relation between the fan rotation speed and the component temperature will be described.

The controller 12 has a "normal map" for a poisoning recovery mode non-implementation state shown by a solid line and a "high-speed map" for a poisoning recovery mode implementation state shown by a dotted line, in both of which the relation between the temperature T of the component 5 to be cooled and the fan rotation speed N is continuously set. The controller 12 switches the "normal map" to the "high-speed map" when the poisoning recovery mode is entered and switches back to the "normal map" when the poisoning recovery mode is not implemented.

In the "normal map", the fan rotation speed N is set to be continuously controlled from a rotation speed N1 for a temperature T1 to a high rotation speed N2 for a high temperature T2 so that the fan rotates at one of the rotation speeds set with respect to the temperatures of the components 5 (cooling water temperature, hydraulic oil temperature, and after cooler outlet temperature) which needs to be the highest.

Compared to the "normal map", the "high-speed map" is configured as follows. A threshold T2 for the component temperature T is reduced to a lower T2', and the corresponding rotation speed N is set to a high speed N3 which is increased from a rotation speed N2 for T2 by ΔN. Moreover, a threshold T1 for a rotation speed N1 is reduced to a lower T1' so that the fan rotation speed N is continuously controlled from the rotation speed N1 for the temperature T1' to the high rotation speed N3 for the high temperature T2'. The increase rotation speed ΔN is set to generate an amount of cooling air that makes the atmospheric temperature of the urea water injector 10 equal to or lower than the limit temperature for overheat prevention.

The controller 12 may be configured as a part of an engine controller that controls the engine 4.

The operation and effects of the engine exhaust gas purifier 2 as described above will be described.

The engine exhaust gas purifier 2 includes the urea SCR catalyst 8 installed in the exhaust gas pipe 6 from the engine 4 to reduce and remove NOx, the urea water injector 10 that supplies urea water serving as a reduction agent to the upstream side of the catalyst, and the controller 12, wherein the urea water injector 10 is installed on the downstream side of air blow from the variable speed cooling fan 14, the rotation speed of which is increased or reduced in accordance with an increase or a decrease in the temperature of the component 5 of the engine 4 to be cooled, and the controller 12 implements the poisoning recovery mode in which the supply of urea water is periodically stopped for a predetermined time and in which the exhaust gas temperature is controlled to increase the temperature of the catalyst 8, the poisoning recovery mode being intended to recover the urea SCR catalyst 8 from sulfur poisoning, and during the poisoning recovery mode, the controller changes the rotation speed of the variable speed cooling fan 14 to a higher speed to increase the amount of blown air to reduce the atmospheric temperature of the urea water injector 10, thus preventing the injector 10 from being overheated.

Thus, when the SCR catalyst 8 is in the poisoning recovery mode, the urea water injector 10 can be prevented from being overheated. Furthermore, because it only requires to position the urea water injector 10 on the downstream side of air blow from the variable speed cooling fan 14 and to control the rotation speed of the fan 14, overheat can be prevented with a relatively inexpensive configuration without the need to provide a large installation space.

Furthermore, the controller 12 has the "normal map" for the poisoning recovery mode non-implementation state and the "high-speed map" for the poisoning recovery mode implementation state in both of which the relation between the temperature T of the component 5 to be cooled and the fan rotation speed N is continuously specified, and switches the "normal map" to the "high-speed map" in the poisoning recovery mode. This ensures that, in the poisoning recovery mode, the rotation speed of the variable speed cooling fan 14 can be increased to generate cooling air so as to make the atmospheric temperature of the urea water injector 10 equal to or lower than the limit temperature for overheat prevention.

The engine exhaust gas purifier 2 is treated as a variable speed fan in terms of the noise regulation because the rotation speed of the variable speed cooling fan 14 is continuously controlled. Thus, even when the fan rotation speed increases as a result of switching to the "high-speed map", a substantial increase in fan noise can be limited to within an acceptable range.

The present invention has been described in detail based on the embodiment. However, the present invention is not limited to the above-described embodiment. For example, many variations or modifications may be made to the embodiment without departing from the scope of the present invention.

For example, the controller 12 switches the "normal map" to the "high-speed map", both of which are indicative of the relation between the temperature T of the component 5 to be cooled and the rotation speed N, to increase the rotation speed of the variable speed cooling fan 14. However, the atmospheric temperature of the urea water injector 10 may be detected to control the rotation speed of the variable speed cooling fan 14 such that the atmospheric temperature becomes equal to or lower than the limit temperature for overheat prevention.

### EXPLANATION OF REFERENCE NUMERALS

- 2: Engine exhaust gas purifier
- 4: Engine
- 5: Component
- 6: Exhaust pipe
- 8: Urea SCR catalyst
- 10: Urea water injector
- 12: Controller

## Claims

1. An engine exhaust gas purifier (2) comprising a urea SCR catalyst (8) installed in an exhaust gas pipe (6) from an engine (4) to reduce and remove NOx, a urea water injector (10) that supplies urea water serving as a reduction agent to an upstream side of the catalyst (8), and a controller (12), wherein the urea water injector (10) is installed on a downstream side of air blow from a variable speed cooling fan (14), the rotation speed of which is increased or reduced in accordance with an increase or a decrease in a temperature of a component (5) of the engine (4) to be cooled, the controller (12) comprising means configured to implement a poisoning recovery mode in which supply of urea water is periodically stopped for a predetermined time and exhaust gas temperature is controlled to increase a temperature of a catalyst (8), the poisoning recovery mode being intended to recover the urea SCR catalyst (8) from sulfur poisoning, and during the poisoning recovery mode, the controller (12) changes the rotation speed of the variable speed cooling fan (14) to a higher speed to increase an amount of blown air to reduce an atmospheric temperature of the urea water injector (10), thus preventing the injector from being overheated.

2. The engine exhaust gas purifier (2) according to claim 1, wherein the controller (12) has a "normal map" for a poisoning recovery mode non-implementation state and a "high-speed map" for a poisoning recovery mode implementation state in both of which a relation between the temperature of the component (5) to be cooled and the fan rotation speed is continuously specified, and comprises means for switching the "normal map" to the "high-speed map" in the poisoning recovery mode.

## Patentansprüche

1. Motorabgasreiniger (2), umfassend einen Harnstoff-SCR-Katalysator (8), der in einem Abgasrohr (6) von einem Motor (4) installiert ist, um NOx zu verringern und zu entfernen, einen Harnstoffwasser-Injektor (10), der Harnstoffwasser, das als ein Reduktionsmittel dient, einer Stromaufwärtsseite des Katalysators (8) zuführt,
und eine Steuerung (12),
wobei der Harnstoffwasser-Injektor (10) auf einer Luftblas-Stromabwärtsseite von einem Kühlgebläse (14) mit variabler Geschwindigkeit installiert ist, dessen Drehzahl gemäß einer Zunahme oder einer Abnahme einer Temperatur einer Komponente (5) des zu kühlenden Motors (4) erhöht oder verringert wird,
wobei die Steuerung (12) Mittel umfasst, die dazu konfiguriert sind, einen Vergiftungs-Erholungsmodus zu implementieren, in welchem eine Zufuhr von Harnstoffwasser periodisch für eine vorbestimmte Zeit angehalten wird und eine Abgastemperatur gesteuert wird, um eine Temperatur eines Katalysators (8) zu erhöhen,
wobei der Vergiftungs-Erholungsmodus dazu bestimmt ist, den Harnstoff-SCR-Katalysator (8) von einer Schwefelvergiftung zu regenerieren, und
wobei während des Vergiftungs-Erholungsmodus die Steuerung (12) die Drehzahl des Kühlgebläses (14) mit variabler Geschwindigkeit auf eine höhere Geschwindigkeit verändert, um eine Menge von geblasener Luft zu erhöhen, um eine atmosphärische Temperatur des Harnstoffwasser-Injektors (10) zu verringern, wodurch folglich verhindert wird, dass der Injektor überhitzt wird.

2. Motorabgasreiniger (2) nach Anspruch 1,
wobei die Steuerung (12) eine "normale Kennlinie" für einen Vergiftungs-Erholungsmodus-Nichtimplementationszustand und eine "Hochgeschwindigkeitskennlinie" für einen Vergiftungs-Erholungsmodus-Implementationszustand hat, wobei in beiden ein Verhältnis zwischen der Temperatur der zu kühlenden Komponente (5) und der Gebläsedrehzahl kontinuierlich spezifiziert ist, und wobei sie Mittel zum Schalten von der "normalen Kennlinie" zu der "Hochgeschwindigkeitskennlinie" im Vergiftungs-Erholungsmodus umfasst.

## Revendications

1. Épurateur de gaz d'échappement de moteur (2) comprenant un catalyseur RCS à urée (8) installé dans un tuyau de gaz d'échappement (6) provenant d'un moteur (4) pour réduire et supprimer le NOx, un injecteur d'urée aqueuse (10) qui fournit de l'urée aqueuse servant d'agent de réduction à un côté amont du catalyseur (8),
et une unité de commande (12),
dans lequel l'injecteur d'urée aqueuse (10) est installé sur un côté aval d'un jet d'air provenant d'un ventilateur de refroidissement à vitesse variable (14), dont la vitesse de rotation est augmentée ou réduite selon une augmentation ou une diminution d'une température d'un composant (5) du moteur (4) à refroidir,
l'unité de commande (12) comprenant un moyen configuré pour mettre en oeuvre un mode de récupération de produits nocifs dans lequel l'alimentation en urée aqueuse est périodiquement arrêtée pendant un temps prédéterminé et la température de gaz d'échappement est commandée pour augmenter une température d'un catalyseur (8),
le mode de récupération de produits nocifs étant destiné à récupérer le catalyseur RCS à urée (8) à partir des produits nocifs soufrés, et
pendant le mode de récupération de produits nocifs, l'unité de commande (12) change la vitesse de rotation du ventilateur à vitesse variable (14) pour une vitesse supérieure pour augmenter une quantité d'air soufflé pour réduire une température atmosphérique de l'injecteur d'urée aqueuse (10), empêchant ainsi la surchauffe de l'injecteur.

2. Épurateur de gaz d'échappement de moteur (2) selon la revendication 1, dans lequel l'unité de commande (12) a un « plan normal » pour un état de non-mise en oeuvre de mode de récupération de produits nocifs et un « plan ultrarapide » pour un état de mise en oeuvre de mode de récupération de produits nocifs, deux plans dans lesquels une relation entre la température du composant (5) à refroidir et la vitesse de rotation de ventilateur est spécifiée de façon continue, et comprend un moyen pour passer du « plan normal » au « plan ultrarapide » dans le mode de récupération de produits nocifs.
